# FASCICULE DE BREVET EUROPEEN

(11) **EP 4 202 572 B1**
(45) Date de publication et mention de la délivrance du brevet: **11.06.2025**
(21) Numéro de dépôt: 21217076.5
(22) Date de dépôt: 22.12.2021
(51) Int. Cl.: G04B 43/00, G04B 39/00, G02B 26/02

(54) **CONTROLE DE TEMPERATURE D'UNE PIECE D'HORLOGERIE**
TEMPERATURKONTROLLE EINER UHR
TEMPERATURE CONTROL FOR A TIMEPIECE

(43) Date de publication de la demande: 28.06.2023
(73) Titulaire: Omega SA, 2502 Biel/Bienne (CH)
(72) Inventeur: GIMKIEWICZ, Christiane, 85737 Ismaning (DE)
(74) Mandataire: ICB SA

(56) Documents cités:
- EP-A1- 3 835 891
- EP-A2- 2 736 046
- WO-A1-2012/165721
- WO-A1-2014/105718
- US-A- 4 260 225

## Description

### Domaine technique de l'invention

L'invention définie par la revendication 1 annexée concerne un dispositif de contrôle de température pour pièce d'horlogerie, comportant une première partie laissant passer la lumière, et une deuxième adjacente à ladite première partie mais distante de ladite première partie et définissant avec elle une chambre intermédiaire de dimensions variables selon une direction axiale et/ou une direction radiale en fonction de la température de ladite première partie.

L'invention concerne encore une pièce d'horlogerie, notamment une montre, comportant au moins un tel dispositif de contrôle de température.

L'invention concerne le domaine du contrôle de température dans une pièce d'horlogerie, notamment une montre, pour rendre possible son fonctionnement, sans altération notable de la marche, dans un milieu soumis à des grandes amplitudes de température, ou encore à des températures très élevées ou très basse, telles qu'on peut en rencontrer dans des applications scientifiques, aéronautiques ou astronautiques notamment.

### Arrière-plan technologique

La température à l'intérieur d'une pièce d'horlogerie, notamment d'une montre, a une influence directe sur son fonctionnement. Les jeux de fonctionnement doivent rester compatibles avec les phénomènes de dilatation dans la plage thermique d'utilisation. La marche de l'oscillateur, en particulier lorsqu'il s'agit d'un oscillateur mécanique, est particulièrement affectée par de gros écarts de température, ce qui n'est pas propice aux applications ou expérimentations qui dépendent d'une estimation correcte et stable du temps.

Des dispositifs externes isolants sont volumineux, et peuvent se révéler malcommodes pour les utilisateurs.

Des dispositifs intégrés à une montre, tels que des glaces réfléchissantes, peuvent rendre la lecture de son affichage difficile, voire impossible.

Le document WO 2014/105718 A1 divulgue des systèmes, des procédés et un appareil de modulation de lumière servant à former une image sur un afficheur. Un modulateur de lumière de l'afficheur peut comprendre un substrat, un obturateur, un premier actionneur et un second actionneur. L'obturateur peut être conçu pour obturer sélectivement un trajet optique à travers le substrat. Le premier actionneur peut être conçu pour déplacer l'obturateur dans un premier sens le long d'un premier axe dans un plan sensiblement parallèle à un plan défini par le substrat, en amenant ainsi l'obturateur d'un premier état à un deuxième état.

### Résumé de l'invention

L'invention se propose d'intégrer à une pièce d'horlogerie, et en particulier dans le volume réduit constitué par une boîte de montre, un dispositif permettant de réguler au mieux la température à l'intérieur de cette pièce d'horlogerie.

A cet effet, l'invention concerne un dispositif de contrôle de température selon la revendication 1 annexée.

Autrement dit le dispositif de contrôle de température pour pièce d'horlogerie, comporte une première partie laissant passer la lumière, définissant avec une deuxième partie adjacente une chambre intermédiaire (9) de dimensions variables selon la température de la première partie, la première partie comporte des premières micropersiennes selon une première répartition spatiale, la deuxième partie comporte des deuxièmes micropersiennes selon une deuxième répartition spatiale et faisant sensiblement face aux premières micropersiennes, pour se superposer partiellement ou totalement dans certaines positions relatives entre la première partie et la deuxième partie, pour faire varier la transmission et/ou la réflexion de la lumière incidente sur la première partie entre un maximum et un minimum.

Dans d'autres modes de réalisation :
- les premières micropersiennes et les deuxièmes micropersiennes sont agencées pour se superposer partiellement ou totalement dans certaines positions relatives de ladite première partie par rapport à ladite deuxième partie, pour faire varier la transmission et/ou la réflexion de la lumière incidente sur ladite première partie entre un maximum et un minimum ;
- ladite première partie présente un premier coefficient d'expansion thermique, qui est différent d'un deuxième coefficient d'expansion thermique que présente ladite deuxième partie ;
- ladite première partie ou ladite deuxième partie est montée sur une troisième partie, qui présente un troisième coefficient thermique qui est différent d'un premier coefficient d'expansion thermique que présente ladite première partie et/ou d'un deuxième coefficient d'expansion thermique que présente ladite deuxième partie ;
- ladite première répartition spatiale et ladite deuxième répartition spatiale sont homothétiques ou identiques ;
- lesdites premières micropersiennes sont situées sur une surface inférieure de ladite première partie, au niveau de ladite chambre intermédiaire ;
- lesdites deuxièmes micropersiennes sont situées sur une surface supérieure de ladite deuxième partie, au niveau de ladite chambre intermédiaire ;
- lesdites premières micropersiennes et/ou lesdites deuxièmes micropersiennes comportent un revêtement réflectif ;
- lesdites première répartition spatiale et deuxième répartition spatiale, et les dimensions de ladite première partie et de ladite deuxième partie sont ajustées pour une réflexion maximale aux plus hautes températures, et pour une transmission maximale aux plus basses températures ;
- ladite première partie comporte au moins une première partie réflective revêtue et/ou structurée, agencée pour renvoyer les rayons lumineux obliques par rapport à une direction axiale de ladite pièce d'horlogerie et pour autoriser le passage des rayons lumineux selon cette direction axiale ;
- au moins une dite première partie réflective comporte des structures prismatiques en saillie sur ladite première partie, disposées selon ladite première répartition spatiale, et comportant chacune un revêtement réflectif ;
- au moins une dite première partie réflective comporte des structures réflectives noyées dans l'épaisseur de ladite première partie pour une meilleure résistance à l'abrasion, disposées selon ladite première répartition spatiale, et comportant chacune un revêtement réflectif ;
- ladite première partie est un couvercle de protection et en ce que ladite deuxième partie est une glace de montre.

L'invention concerne encore une pièce d'horlogerie, notamment une montre, comportant au moins un tel dispositif de contrôle de température.

### Brève description des figures

Les buts, avantages et caractéristiques de l'invention apparaîtront mieux à la lecture de la description détaillée qui va suivre, en référence aux dessins annexés, où :

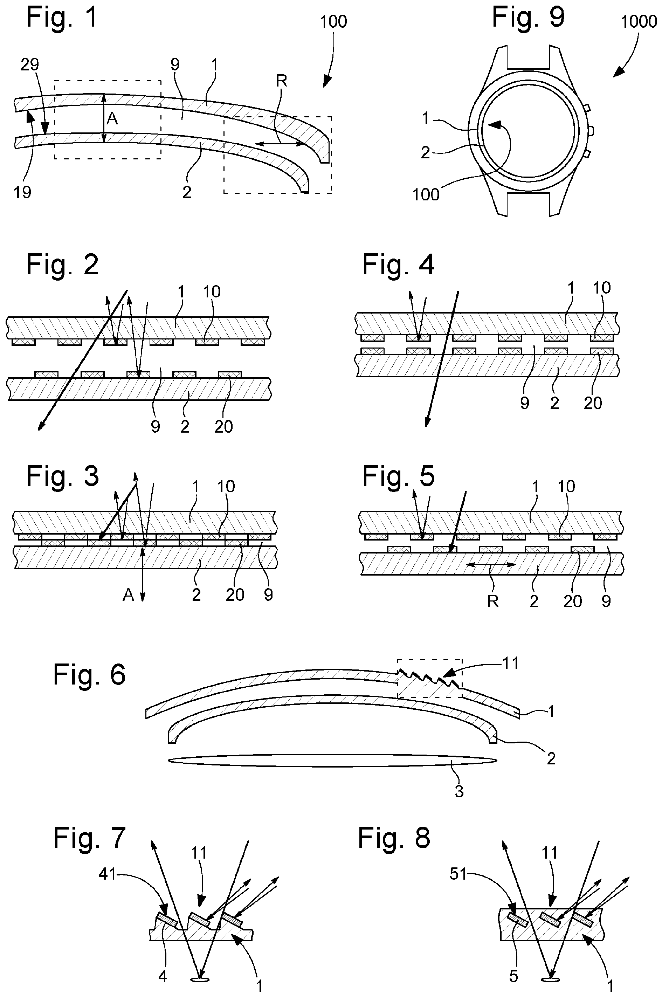

- la figure 1 montre, de façon schématisée et en coupe transversale d'une pièce d'horlogerie constituée par une montre, une première partie qui est un couvercle de protection, au-dessus d'une deuxième partie qui est une glace de montre; une flèche A indique l'activation par expansion axiale, tandis qu'une flèche R correspond à l'activation par expansion radiale; les parties fonctionnelles de la montre, non représentées, sont sous la deuxième partie, c'est-à-dire du côté opposé à la première partie ;
- les figures 2 à 5 montrent, de façon similaire à la figure 1, le détail local du positionnement relatif de micropersiennes que comportent respectivement la première partie et la deuxième partie, respectivement des premières micropersiennes selon une première répartition spatiale, et des deuxièmes micropersiennes selon une deuxième répartition spatiale, qui constituent le dispositif de contrôle de température selon l'invention, et qui sont agencées pour se superposer partiellement ou totalement dans certaines positions relatives de la première partie par rapport à la deuxième partie, pour faire varier la transmission et/ou la réflexion de la lumière incidente sur la première partie entre un maximum et un minimum, et faire ainsi varier la température, ou la stabiliser, à l'intérieur de la pièce d'horlogerie ;
- les figures 2 et 4 correspondent à une température inférieure à la température optimale ;
- et les figures 3 et 5 correspondent à une température inférieure à la température optimale ;
- le passage de la position de la figure 2 à celle de la figure 3 correspond à un mouvement axial relatif selon la direction axiale A (éloignement de la figure 3 vers la figure 2, rapprochement dans le cas contraire) ;
- tandis que le passage de la position de la figure 4 à celle de la figure 5 correspond à un mouvement radial relatif selon la direction R ;
- la figure 6 représente, de façon similaire à la figure 1, une variante dans laquelle la première partie comporte au moins une première partie réflective revêtue et/ou structurée, qui est agencée pour renvoyer les rayons lumineux obliques par rapport à une direction axiale de la pièce d'horlogerie, et pour autoriser le passage des rayons lumineux selon cette direction axiale ;
- la figure 7 représente, de façon similaire à la figure 6, une variante dans laquelle une telle première partie réflective comporte des structures prismatiques en saillie sur la première partie, disposées selon la première répartition spatiale, et comportant chacune un revêtement réflectif; les rayonnements les plus inclinés, visibles sur la partie droite de la figure, sont réfléchis hors du champ de vision de l'utilisateur, alors que ceux situés dans son champ de vision sont transmis vers l'affichage de la montre, ce qui permet à l'utilisateur de lire l'heure ou d'autres indications affichées par la montre ;
- la figure 8 représente, de façon similaire à la figure 6, une variante dans laquelle une telle première partie réflective comporte des structures réflectives noyées dans l'épaisseur de la première partie pour une meilleure résistance à l'abrasion, disposées selon la première répartition spatiale, et comportant chacune un revêtement réflectif ;
- la figure 9 représente, de façon schématisée, une pièce d'horlogerie, ici une montre, comportant un tel dispositif de contrôle de température.

### Description détaillée de l'invention

L'invention concerne un dispositif de contrôle de température 100 pour pièce d'horlogerie 1000, comportant une première partie 1 laissant passer la lumière, et une deuxième partie 2 adjacente à la première partie 1 mais distante de la première partie 1 et définissant avec elle une chambre intermédiaire 9. Cette chambre intermédiaire 9 est de dimensions variables selon une direction axiale A et/ou une direction radiale R en fonction de la température de la première partie 1.

L'invention met en œuvre des micropersiennes pour assurer le contrôle de température dans la montre, pour assurer la régularité de la marche quand il s'agit d'une montre mécanique ou électromécanique. Chaque micropersienne, autrement appelée « structure à/de micropersienne » ou encore « élément structuré en/à/de micorpersienne », est formée dans la première ou la deuxième partie. Cette micropersienne peut modifier l'angle d'incidence, l'angle de réflexion et/ou l'angle de réfraction de la lumière incidente sur ladite première partie. La micropersienne peut avoir des caractéristiques réfractaires ou des caractéristiques qui modifient la direction de la lumière passant à travers ou se reflétant sur cette micropersienne.

Selon l'invention, la première partie 1 comporte une pluralité de premières micropersiennes 10 selon une première répartition spatiale, et la deuxième partie 2 comporte une pluralité de deuxièmes micropersiennes 20 selon une deuxième répartition spatiale et faisant sensiblement face aux premières micropersiennes 10. Les premières micropersiennes 10 et les deuxièmes micropersiennes 20 sont agencées pour se superposer partiellement ou totalement dans certaines positions relatives de la première partie 1 par rapport à la deuxième partie 2, pour faire varier la transmission et/ou la réflexion de la lumière incidente sur la première partie 1 entre un maximum et un minimum. Chaque partie porte ainsi une répartition spatiale spécifique de micropersiennes, qui se superposent ainsi pour un minimum et un maximum de transmission / réflexion selon la position de la première partie 1 par rapport à la deuxième partie 2. Ce dispositif permet ainsi de faire varier la température, ou la stabiliser, à l'intérieur de la pièce d'horlogerie selon la position relative des micropersiennes.

Un mouvement sous l'action de la température est possible, si, ou bien une partie présente un coefficient d'expansion thermique différent de celui de l'autre partie, ou bien si une des parties est montée sur une troisième partie avec un coefficient d'expansion thermique différent.

Plus particulièrement, la première partie 1 présente un premier coefficient d'expansion thermique, qui est différent d'un deuxième coefficient d'expansion thermique que présente la deuxième partie 2.

Plus particulièrement, la première partie 1 ou la deuxième partie 2 est montée sur une troisième partie, qui présente un troisième coefficient d'expansion thermique qui est différent d'un premier coefficient d'expansion thermique que présente la première partie 1 et/ou d'un deuxième coefficient d'expansion thermique que présente la deuxième partie 2. Plus particulièrement encore, le troisième coefficient d'expansion thermique est différent à la fois du premier coefficient d'expansion thermique et du deuxième coefficient d'expansion thermique.

Plus particulièrement, la première répartition spatiale et la deuxième répartition spatiale sont homothétiques ou identiques.

Plus particulièrement, les premières micropersiennes 10 sont situées sur une surface inférieure 19 de la première partie 1, au niveau de la chambre intermédiaire 9.

Plus particulièrement, les deuxièmes micropersiennes 20 sont situées sur une surface supérieure 29 de la deuxième partie 2, au niveau de la chambre intermédiaire 9.

Plus particulièrement, les premières micropersiennes 10 et/ou les deuxièmes micropersiennes 20 comportent un revêtement réflectif

Plus particulièrement, pour un bon contrôle de la chaleur, les première répartition spatiale et deuxième répartition spatiale, et les dimensions de la première partie 1 et de la deuxième partie 2, sont ajustées pour une réflexion maximale aux plus hautes températures, et pour une transmission maximale aux plus basses températures.

La figure 1 montre, de façon schématisée et en coupe, une première partie 1 qui est un couvercle de protection, au-dessus d'une deuxième partie 2 qui est une glace de montre; la flèche A indique l'activation par expansion axiale, tandis que la flèche R correspond à l'activation par expansion radiale.

Les figures 2 à 5 montrent le détail local du positionnement relatif des micropersiennes 10 et 20 que comportent respectivement la première partie 1 et la deuxième partie 2. Les figures 2 et 4 correspondent à une température inférieure à la température optimale, et les figures 3 et 5 correspondent à une température inférieure à la température optimale. Le passage de la position de la figure 2 à celle de la figure 3 correspond à un mouvement axial relatif selon la direction axiale A (éloignement de la figure 3 vers la figure 2, rapprochement dans le cas contraire), tandis que le passage de la position de la figure 4 à celle de la figure 5 correspond à un mouvement radial relatif selon la direction R. Par exemple les premières micropersiennes 10 formant la couche réflective de la première partie 1 sont en oxynitride d'aluminium AlON, à transparence optique supérieure à 85%, dans la plage de longueurs d'onde de 250 à 4000 nanomètres (du proche ultraviolet au milieu de la bande infrarouge), tandis que les deuxièmes micropersiennes 20, qui ont un coefficient d'expansion thermique plus élevé, sont en « Hexalite » ou similaire.

Il est, ainsi, avantageux de jouer sur les coefficients d'expansion thermique des différents composants, ici des verres, pour aligner les répartitions spatiales des micropersiennes, pour réguler le flux de rayonnement atteignant la surface de la montre, et pour réguler de ce fait la charge thermique de la montre.

Plus particulièrement, tel que visible sur la figure 6, la première partie 1 comporte au moins une première partie réflective 11 revêtue et/ou structurée, qui est agencée pour renvoyer les rayons lumineux obliques par rapport à une direction axiale de la pièce d'horlogerie 1000 et pour autoriser le passage des rayons lumineux selon cette direction axiale.

Les répartitions spatiales peuvent inclure un relief pour profiter d'un certain comportement en fonction de l'incidence comme le montre la figure 7, où au moins une telle première partie réflective 11 comporte des structures prismatiques 4 en saillie sur la première partie 1, disposées selon la première répartition spatiale, et comportant chacune un revêtement réflectif 41. Les rayonnements les plus inclinés, visibles sur la partie droite de la figure, sont réfléchis hors du champ de vision de l'utilisateur, alors que ceux situés dans son champ de vision sont transmis vers l'affichage de la montre, ce qui permet à l'utilisateur de lire l'heure ou d'autres indications affichées par la montre.

Plus particulièrement, tel que visible sur la figure 8 et selon le même principe que la figure 7, au moins une telle première partie réflective 11 comporte des structures réflectives 5 noyées dans l'épaisseur de la première partie 1 pour une meilleure résistance à l'abrasion, disposées selon la première répartition spatiale, et comportant chacune un revêtement réflectif 51.

Dans une variante non illustrée, la pièce d'horlogerie 1000 comporte au moins un capteur interne de température, et un moyen de pilotage interne pour comparer la température mesurée à une température de consigne, et pour commander un actionneur, par exemple piézoélectrique, pour mouvoir la première partie 1 et/ou la deuxième partie 2 selon la direction axiale A et/ou la direction radiale R.

Plus particulièrement, la première partie 1 est un couvercle de protection et la deuxième partie 2 est une glace de montre. Naturellement d'autres parties de la montre peuvent convenir à l'implantation de micropersiennes sur deux partie adjacentes de la montre, telles que lunette, réhaut, cadran, parties du mouvement, ou autres.

On comprend que l'invention permet d'utiliser la capacité de la lumière, à la fois de transférer la chaleur, notamment par réflexion, et de consulter l'affichage de la montre, notamment de lire l'heure. Jusqu'à présent, il n'y a pas eu de différenciation dans le spectre. On pourrait considérer le fait de fermer optiquement la montre dans un état chaud rendrait impossible la lecture de son affichage. Toutefois il est possible de mettre en œuvre des revêtements qui, par exemple, transmettent la lumière visible, et réfléchissent une autre bande comme l'infrarouge. Les miroirs chauds permettent notamment de transmettre l'ultraviolet ou certaines fréquences du visible. Par exemple on connaît des miroirs chauds à transmission élevée dans la bande 400-690 nanomètres, et réflexion élevée dans la bande 750-1125 nanomètres; ou encore transmettant 85% du visible et réfléchissant le proche infrarouge et au moins 90% de l'infrarouge; ou encore transmettant 80% du visible et de l'ultraviolet et réfléchissant 70% de l'infrarouge.

Ces aménagements permettent de rendre les micropersiennes perméables au spectre visible pour permettre à l'utilisateur de lire l'heure, même dans leur état fermé.

L'invention concerne encore une pièce d'horlogerie 1000 comportant au moins un tel dispositif de contrôle de température 100. Plus particulièrement, cette pièce d'horlogerie 1000 est une montre.

## Revendications

1. Dispositif de contrôle de température (100) pour pièce d'horlogerie (1000), comportant une première partie (1) laissant passer une lumière, et une deuxième partie (2) définissant avec ladite première partie (1) une chambre intermédiaire (9) de dimensions variables selon une direction axiale (A) et/ou une direction radiale (R) en fonction de la température de ladite première partie (1), dispositif dans lequel ladite première partie (1) comporte une pluralité de premières micropersiennes (10) selon une première répartition spatiale, et ladite deuxième partie (2) comporte une pluralité de deuxièmes micropersiennes (20) selon une deuxième répartition spatiale, lesdites première et deuxième parties pourvues de ces premières et deuxièmes micropersiennes (10, 20) étant configurées pour se déplacer l'une par rapport à l'autre, faisant ainsi varier la transmission et/ou la réflexion de de ladite lumière sur ladite première partie (1) entre un maximum et un minimum, ladite première partie (1) étant apte à se déplacer selon une direction axiale (A) et/ou une direction radiale (R) relativement à ladite deuxième partie en fonction de la température de cette première partie (1).

2. Dispositif de contrôle de température (100), selon la revendication 1, **caractérisé en ce que** les premières micropersiennes (10) et les deuxièmes micropersiennes (20) sont agencées pour se superposer partiellement ou totalement dans certaines positions relatives de ladite première partie (1) par rapport à ladite deuxième partie (2), pour faire varier la transmission et/ou la réflexion de la lumière incidente sur ladite première partie (1) entre un maximum et un minimum.

3. Dispositif de contrôle de température (100) selon l'une quelconque des revendications précédentes, **caractérisé en ce que** ladite première partie (1) présente un premier coefficient d'expansion thermique, qui est différent d'un deuxième coefficient d'expansion thermique que présente ladite deuxième partie (2).

4. Dispositif de contrôle de température (100) selon l'une quelconque des revendications précédentes, **caractérisé en ce que** ladite première partie (1) ou ladite deuxième partie (2) est montée sur une troisième partie, qui présente un troisième coefficient thermique qui est différent d'un premier coefficient d'expansion thermique que présente ladite première partie (1) et/ou d'un deuxième coefficient d'expansion thermique que présente ladite deuxième partie (2).

5. Dispositif de contrôle de température (100) selon l'une quelconque des revendications précédentes, **caractérisé en ce que** ladite première répartition spatiale et ladite deuxième répartition spatiale sont homothétiques ou identiques.

6. Dispositif de contrôle de température (100) selon l'une quelconque des revendications précédentes, **caractérisé en ce que** lesdites premières micropersiennes (10) sont situées sur une surface inférieure (19) de ladite première partie (1), au niveau de ladite chambre intermédiaire (9).

7. Dispositif de contrôle de température (100) selon l'une quelconque des revendications précédentes, **caractérisé en ce que** lesdites deuxièmes micropersiennes (20) sont situées sur une surface supérieure (29) de ladite deuxième partie (2), au niveau de ladite chambre intermédiaire (9).

8. Dispositif de contrôle de température (100) selon l'une quelconque des revendications précédentes, **caractérisé en ce que** lesdites premières micropersiennes (10) et/ou lesdites deuxièmes micropersiennes (20) comportent un revêtement réflectif

9. Dispositif de contrôle de température (100) selon l'une des revendications 1 à 6, **caractérisé en ce que** lesdites première répartition spatiale et deuxième répartition spatiale, et les dimensions de ladite première partie (1) et de ladite deuxième partie (2) sont ajustées pour une réflexion maximale aux plus hautes températures, et pour une transmission maximale aux plus basses températures.

10. Dispositif de contrôle de température (100) selon l'une quelconque des revendications précédentes, **caractérisé en ce que** ladite première partie (1) comporte au moins une première partie réflective (11) revêtue et/ou structurée, agencée pour renvoyer les rayons lumineux obliques par rapport à une direction axiale de ladite pièce d'horlogerie (1000) et pour autoriser le passage des rayons lumineux selon cette direction axiale.

11. Dispositif de contrôle de température (100) selon la revendication 10, **caractérisé en ce qu'**au moins une dite première partie réflective (11) comporte des structures prismatiques (4) en saillie sur ladite première partie (1), disposées selon ladite première répartition spatiale, et comportant chacune un revêtement réflectif (41).

12. Dispositif de contrôle de température (100) selon la revendication 10 ou 11, **caractérisé en ce qu'**au moins une dite première partie réflective (11) comporte des structures réflectives (5) noyées dans l'épaisseur de ladite première partie (1) pour une meilleure résistance à l'abrasion, disposées selon ladite première répartition spatiale, et comportant chacune un revêtement réflectif (51).

13. Dispositif de contrôle de température (100) selon l'une quelconque des revendications précédentes, **caractérisé en ce que** ladite première partie (1) est un couvercle de protection et **en ce que** ladite deuxième partie (2) est une glace de montre.

14. Pièce d'horlogerie (1000) comportant au moins un dispositif de contrôle de température (100) selon l'une quelconque des revendications précédentes.

15. Pièce d'horlogerie (1000) selon la revendication 14, **caractérisé en ce qu'**elle est une montre.

## Patentansprüche

1. Temperaturkontrollvorrichtung (100) für ein Uhrwerkbauteil (1000), umfassend ein erstes Teil (1), das Licht durchlässt, und ein zweites Teil (2), das zusammen mit dem ersten Teil (1) eine Zwischenkammer (9) bildet, deren Abmessungen sich in Abhängigkeit von der Temperatur des ersten Teils (1) entlang einer Achsrichtung (A) und/oder einer Radialrichtung (R) verändern; wobei das erste Teil (1) eine Vielzahl erster Mikropersiennen (10) gemäß einer ersten räumlichen Anordnung und das zweite Teil (2) eine Vielzahl zweiter Mikropersiennen (20) gemäß einer zweiten räumlichen Anordnung aufweist; wobei das erste und das zweite Teil, die mit den ersten und zweiten Mikropersiennen (10, 20) versehen sind, so konfiguriert sind, dass sie sich relativ zueinander bewegen können, um die Transmission und/oder Reflexion des durch das erste Teil (1) hindurchtretenden Lichts zwischen einem Maximum und einem Minimum zu verändern, wobei das erste Teil (1) in Abhängigkeit von seiner Temperatur axial (A) und/oder radial (R) relativ zum zweiten Teil beweglich ist.

2. Temperaturkontrollvorrichtung (100) nach Anspruch 1, **dadurch gekennzeichnet, dass** die ersten Mikropersiennen (10) und die zweiten Mikropersiennen (20) so angeordnet sind, dass sie sich in bestimmten relativen Positionen des ersten Teils (1) gegenüber dem zweiten Teil (2) teilweise oder vollständig überlagern, um die Transmission und/oder die Reflexion des auf das erste Teil (1) einfallenden Lichts zwischen einem Maximum und einem Minimum zu verändern.

3. Temperaturkontrollvorrichtung (100) nach einem der vorhergehenden Ansprüche, **dadurch gekennzeichnet, dass** das erste Teil (1) einen ersten thermischen Ausdehnungskoeffizienten aufweist, der sich von einem zweiten thermischen Ausdehnungskoeffizienten unterscheidet, den das zweite Teil (2) aufweist.

4. Temperaturkontrollvorrichtung (100) nach einem der vorhergehenden Ansprüche, **dadurch gekennzeichnet, dass** das erste Teil (1) oder das zweite Teil (2) auf einem dritten Teil montiert ist, die einen dritten thermischen Ausdehnungskoeffizienten aufweist, der sich von einem ersten thermischen Ausdehnungskoeffizienten, den das erste Teil (1) und/oder einem zweiten thermischen Ausdehnungskoeffizienten, den das zweite Teil (2) aufweist, unterscheidet.

5. Temperaturkontrollvorrichtung (100) nach einem der vorhergehenden Ansprüche, **dadurch gekennzeichnet, dass** die erste räumliche Verteilung und die zweite räumliche Verteilung homothetisch oder identisch sind.

6. Temperaturkontrollvorrichtung (100) nach einem der vorhergehenden Ansprüche, **dadurch gekennzeichnet, dass** sich die genannten ersten Mikropersiennes (10) auf einer unteren Fläche (19) des ersten Teils (1) auf Höhe der genannten Zwischenkammer (9) befinden.

7. Temperaturkontrollvorrichtung (100) nach einem der vorhergehenden Ansprüche, **dadurch gekennzeichnet, dass** sich die genannten zweiten Mikropersiennes (20) auf einer oberen Fläche (29) des zweiten Teils (2) auf Höhe der genannten Zwischenkammer (9) befinden.

8. Temperaturkontrollvorrichtung (100) nach einem der vorhergehenden Ansprüche, **dadurch gekennzeichnet, dass** die genannten ersten Mikropersiennes (10) und/oder die genannten zweiten Mikropersiennes (20) eine reflektierende Beschichtung aufweisen.

9. Temperaturkontrollvorrichtung (100) nach einem der Ansprüche 1 bis 6, **dadurch gekennzeichnet, dass** die genannte erste und zweite räumliche Verteilung sowie die Abmessungen des ersten (1) und des zweiten (2) Teils so angepasst sind, dass sie bei hohen Temperaturen eine maximale Reflexion und bei niedrigen Temperaturen eine maximale Transmission ermöglichen.

10. Temperaturkontrollvorrichtung (100) nach einem der vorhergehenden Ansprüche, **dadurch gekennzeichnet, dass** das erste Teil (1) mindestens einen ersten reflektierenden Abschnitt (11) umfasst, der beschichtet und/oder strukturiert ist und so angeordnet ist, dass er schräge Lichtstrahlen relativ zu einer Achsrichtung des Uhrenteils (1000) reflektiert und den Durchtritt von Lichtstrahlen entlang dieser Achsrichtung ermöglicht.

11. Temperaturkontrollvorrichtung (100) nach Anspruch 10, **dadurch gekennzeichnet, dass** mindestens eines der genannten ersten reflektierenden Teile (11) prismatische Strukturen (4) aufweist, die auf dem genannten ersten Teil (1) vorspringen, gemäß der genannten ersten räumlichen Verteilung angeordnet sind und jeweils eine reflektierende Beschichtung (41) aufweisen.

12. Temperaturkontrollvorrichtung (100) nach Anspruch 10 oder 11, **dadurch gekennzeichnet, dass** mindestens eines der genannten ersten reflektierenden Teile (11) reflektierende Strukturen (5) aufweist, die in der Dicke des genannten ersten Teils (1) eingebettet sind, um eine verbesserte Abriebfestigkeit zu gewährleisten, wobei diese Strukturen gemäß der genannten ersten räumlichen Verteilung angeordnet sind und jeweils eine reflektierende Beschichtung (51) aufweisen.

13. Temperaturkontrollvorrichtung (100) nach einem beliebigen der vorhergehenden Ansprüche, **dadurch gekennzeichnet, dass** das erste Teil (1) ein Schutzdeckel und das zweite Teil (2) ein Uhrglas ist.

14. Uhrwerk (1000), umfassend mindestens eine Temperaturkontrollvorrichtung (100) nach einem beliebigen der vorhergehenden Ansprüche.

15. Uhrwerk (1000) nach Anspruch 14, **dadurch gekennzeichnet, dass** es eine Uhr ist.

## Claims

1. Temperature control device (100) for timepiece (1000), including a first light-transmitting portion (1), and a second portion (2) defining with said first portion (1) an intermediate chamber (9) of variable dimensions in an axial direction (A) and/or a radial direction (R) depending on the temperature of said first portion (1), device in which said first portion (1) includes a plurality of first microlouvers (10) according to a first spatial distribution, and said second portion (2) includes a plurality of second microlouvers (20) according to a second spatial distribution, said first and second portions provided with these first and second microlouvers (10, 20) being configured to move in relation to one another, thus varying the transmission and/or the reflection of said light on said first portion (1) between a maximum and a minimum, said first portion (1) being capable of moving in an axial direction (A) and/or a radial direction (R) relative to said second portion depending on the temperature of this first portion (1).

2. Temperature control device (100), according to claim 1, **characterised in that** the first microlouvers (10) and the second microlouvers (20) are arranged to superimpose partially or totally in certain relative positions of said first portion (1) in relation to said second portion (2), in order to vary the transmission and/or the reflection of the incident light on said first portion (1) between a maximum and a minimum.

3. Temperature control device (100) according to any one of the preceding claims, **characterised in that** said first portion (1) has a first thermal expansion coefficient, which is different from a second thermal expansion coefficient of said second portion (2).

4. Temperature control device (100) according to any one of the preceding claims, **characterised in that** said first portion (1) or said second portion (2) is mounted on a third portion, which has a third thermal expansion coefficient that is different from a first thermal expansion coefficient of said first portion (1) and/or from a second thermal expansion coefficient of said second portion (2).

5. Temperature control device (100) according to any one of the preceding claims, **characterised in that** said first spatial distribution and said second spatial distribution are homothetic or identical.

6. Temperature control device (100) according to any one of the preceding claims, **characterised in that** said first microlouvers (10) are located on a lower surface (19) or said first portion (1), at said intermediate chamber (9).

7. Temperature control device (100) according to any one of the preceding claims, **characterised in that** said second microlouvers (20) are located on an upper surface (29) of said second portion (2), at said intermediate chamber (9).

8. Temperature control device (100) according to any one of the preceding claims, **characterised in that** said first microlouvers (10) and/or said second microlouvers (20) include a reflective coating

9. Temperature control device (100) according to one of claims 1 to 6, **characterised in that** said first spatial distribution and second spatial distribution, and the dimensions of said first portion (1) and of said second portion (2) are adjusted for a maximum reflection at the highest temperatures, and for a maximum transmission at the lowest temperatures.

10. Temperature control device (100) according to any one of the preceding claims, **characterised in that** said first portion (1) includes at least one first coated and/or structured reflective portion (11), arranged to send back the oblique light rays in relation to an axial direction of said timepiece (1000) and to allow light rays to pass through in this axial direction.

11. Temperature control device (100) according to claim 10, **characterised in that** at least one said first reflective portion (11) includes prismatic structures (4) protruding on said first portion (1), disposed according to said first spatial distribution, and each including a reflective coating (41).

12. Temperature control device (100) according to claim 10 or 11, **characterised in that** at least one said first reflective portion (11) includes reflective structures (5) embedded in the thickness of said first portion (1) for a better abrasion resistance, disposed according to said first spatial distribution, and each including a reflective coating (51).

13. Temperature control device (100) according to any one of the preceding claims, **characterised in that** said first portion (1) is a protective cover and **in that** said second portion (2) is a watch crystal.

14. Timepiece (1000) including at least one temperature control device (100) according to any one of the preceding claims.

15. Timepiece (1000) according to claim 14, **characterised in that** it is a watch.
